(19) Europäisches Patentamt / European Patent Office / Office européen des brevets

(11) **EP 1 956 595 B1**

(12) **EUROPEAN PATENT SPECIFICATION**

(45) Date of publication and mention
of the grant of the patent:
**28.04.2010 Bulletin 2010/17**

(51) Int Cl.:
***G11B 7/125*** *(2006.01)*   *G11B 7/0045* *(2006.01)*

(21) Application number: **08250412.7**

(22) Date of filing: **04.02.2008**

(54) **Recording condition adjusting method of optical disc recording/playing system, optical recording playing device and optical disc**

Verfahren zur Anpassung der Aufzeichnungsbedingungen für optische Plattenaufzeichnungs-/-wiedergabesysteme, optische Aufzeichnungswiedergabevorrichtung und optische Platte

Procédé de réglage de la condition d'enregistrement d'un système d'enregistrement/lecteur de disque optique dispositif de lecture/enregistrement optique et disque optique

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.02.2007 JP 2007025446**

(43) Date of publication of application:
**13.08.2008 Bulletin 2008/33**

(73) Proprietor: **TAIYO YUDEN CO., LTD.**
**Taitou-ku**
**Tokyo 110-0005 (JP)**

(72) Inventor: **Kakimoto, Hiraya**
**Tokyo 110-0005 (JP)**

(74) Representative: **Jackson, Richard Eric et al**
**Carpmaels & Ransford**
**43-45 Bloomsbury Square**
**London WC1A 2RA (GB)**

(56) References cited:
**EP-A- 1 320 089**      **EP-A- 1 560 208**
**WO-A-2007/052194**    **US-A1- 2002 136 123**
**US-A1- 2006 083 135**  **US-A1- 2006 203 646**
**US-A1- 2007 127 336**  **US-A1- 2007 291 621**

**Description**

BACKGROUND OF THE INVENTION

1. Field of the Invention

The present invention relates to optimizing technology of recording conditions as to an optical disc.

2. Description of the Related Art

Optical information recording media such as CD-R (also referred to as recordable CD), DVD±R (also referred to as recordable DVD disc), HD DVD-R (also referred to as HD DVD disc), BD-R (also referred to as Blu-ray disc), and so forth have a configuration wherein a recording layer, a reflecting layer, and a protecting layer as necessary, are formed on one of the surfaces of an optically-transparent disc-shaped substrate. Also, on one of the surfaces of the above-described substrate where a recording layer and a reflecting layer are formed spiral-shaped or concentric grooves called grooves are formed, and between adjacent grooves is formed in a protruding portion called a land. With such an optical disc, a recording laser beam is irradiated on the recording layer on grooves while tracking along a groove by an optical disc recording/playing device to form pits (hereafter, referred to marks), whereby recording is performed. Playing is performed by irradiating a laser for playing on arrays with the length of this mark as nT (let us say that the length of a bit between reference channel clocks is T, and the length of n integral multiplication is nT), and with the length of a portion (hereafter, referred to space) between marks as nT to convert reflected light into a playing signal.

Such a device for performing recording or playing with an optical disc recording/playing system is designed so as to handle recording conditions which differ each time recording is performed as to an individual optical disc, due to drive, optical disc (also referred to as media), recording speed, and so forth. In order to handle such recording conditions, optical disc recording/playing devices employ a technique for setting the intensity of a laser beam (hereafter, also referred to as recording power) in an optimal manner. As the technique thereof, there is a device employing OPC (Optimal Power Calibration) as one of selection means. With this OPC, test recording is performed before data recording by changing the output of a laser beam for recording within a test region (Power Calibration Area) within an optical disc for recording. Next, of the results of this test recording, the optimal recording power which provides good recording quality is selectively set as compared with initial conditions registered beforehand. That is to say, this device performs recording to the data recording area of an optical disc using a laser beam for recording having the set optimal recording power.

Next, a technique has been employed wherein as a parameter indicating a recording state from change in a recording/playing signal at the time of changing recording power conditions, the calculation value of β (hereafter, referred to as a β value) is calculated, which is a type of asymmetry serving as an evaluation index indicating asymmetry of the waveform obtained by playing a recording waveform, the optimal recording power is determined such that this β value becomes a target value or a value close thereto, thereby performing optimal recording correction.

Further, in order to handle change in property (sensitivity) depending on influence of film thickness from the inner circumference to the outer circumference of an optical disc, warping of an optical disc, or the like, a technique (ROPC: Running Optimal Power Calibration) has commonly been known wherein according to the detection of a sub spot caused around a main spot due to detection of returned light (WRF) to a recording spot or optical diffraction during data recording, the β value, jitter (shaking in the time axis direction of a digital signal), or an evaluation index value having correlation therewith is calculated, whereby recording power conditions are optimized in real time according to the correlation with an optical disc itself or the recording/playing device of an optical disc.

In addition to the above-described techniques, as a simple technique of the above-described techniques, a device has been disclosed, which employs a technique (WOPC: Walking Optimal Power Calibration) wherein during data recording from the inner circumference to the outer circumference of an optical disc, recording operation is stopped temporarily at a predetermined position of the predetermined optical disc, the data area recorded immediately before thereof is played, whereby the β value, jitter, or an evaluation index value having correlation therewith is calculated to optimize recording power conditions. As for WOPC, for example, Japanese Unexamined Patent Application Publication NO. 2004-234812 may be referenced.

Note however, with an evaluation technique alone which takes the β value employed for such DVD or a similar asymmetry calculation value (hereafter, referred to an asymmetry value) as an index, handling is insufficient as to an optical disc recording/playing device with an optical disc recording playing system for high-density recording/playing employing PRML (Partial Response Maximum Likelihood) signal processing system, i.e., an optical disc recording/playing system in accordance with Blu-ray specifications and HD-DVD specifications. In particular, there is a problem wherein the β value and asymmetry value cannot handle optical recording information media (hereafter, referred to as an optical disc) having no correlation with recording power.

## SUMMARY OF THE INVENTION

To this end, the present invention, which has been made in light of the above-described problems, provides a new technique for adjusting recording conditions at the time of recording/playing an optical disc.

Also, the present invention provides an adjustment technique of recording conditions which serves effectively with an optical disc recording/playing system.

Further, the present invention provides a technique which enables not only recording power but also other recording parameters to be adjusted appropriately.

A recording condition power adjusting method of an optical disc recording/playing system according to a first aspect of the present invention includes the steps of: measuring a playing signal obtained by playing the result of a span of written or recorded data in an optical disc; determining whether or not the asymmetry value calculated from the measurement result of the measuring step can be employed for adjustment of recording power; calculating predetermined statistic according to a peak value which is one of a local maximal value and a local minimal value with the amplitude of a playing signal according to specifying codes from the measurement result in the measuring step, in the case of determining that the asymmetry value cannot be employed for adjustment of recording power; and deciding the recording power based on the predetermined statistic.

With an optical recording/playing system, recording power cannot be adjusted based on an asymmetry value in some cases, but employing the above-described technique enables such a case to be handled.

Note that the predetermined statistic is a case of the difference quantity between the maximum value and minimum value of peak values, or is a case of the dispersion of peak values. In either case, an effective index can be provided in the case of adjusting recording power.

Also, the determining step is a step for determining by reading in the media ID of the optical disc, which also sometimes includes a step for determining whether or not with media IDs enumerated in the optical disc beforehand, the asymmetry value cannot be employed for adjustment of recording power. In the case of knowing in advance that recording power has no correlation with an asymmetry value, determination can thus be made with media IDs, but determination may be made regarding whether or not recording power has correlation with an asymmetry value in each case.

Further, the deciding step may include a step for specifying optimal recording power from the relation between the recording power and the predetermined statistic, which is specified from the predetermined statistic corresponding to a plurality of the recording power. For example, in the event that test recording can be performed with a plurality of recording power, the optimal recording power can be specified.

Also, the deciding step may include a step for calculating correction amount as to the recording power at the present moment from the relation between the recording power and the predetermined statistic, which is specified from the predetermined statistic corresponding to a plurality of the recording power. According to this, the case of adjusting recording power during data recording can be handled.

Note that the relation between the recording power and the predetermined statistic may be obtained at the time of test recording, or the relation between the recording power and the predetermined statistic may be obtained from data recorded beforehand in the optical disc. In the former case, adjustment can be performed based on the data according to the optical disc thereof, and in the latter case, processing load for obtaining the above-described relation can be reduced.

Also, a recording power condition adjusting method of an optical disc recording/playing system according to a second aspect of the present invention includes the steps of: measuring a playing signal obtained by playing the result of written or recorded data in an optical disc; calculating an evaluation value regarding deviance between the signal state of the playing signal corresponding to a predetermined code pattern and a reference state specified from the predetermined codes pattern from the measurement result in the measuring step; and deciding a recording power value corresponding to the predetermined code pattern based on the evaluation value. According to including those steps, the recording parameters other than recording power can be decided appropriately.

The deciding step for deciding the recording parameter may include a step for specifying the optimal value of the recording parameter based on the relation between the recording parameter and the evaluation value, which is specified from the evaluation value corresponding to the multiple values of the recording parameter. For example, in the event that test recording can be performed with multiple values of a particular recording parameter, the optimal value of the particular recording parameter can be specified.

Further, the deciding step for deciding the recording parameter may include a step for calculating the correction amount of the current value of the recording parameter based on the relation between the recording parameter and the evaluation value, which is specified from the evaluation value corresponding to the multiple values of the recording parameter. According to this, the recording parameter can be adjusted during data recording.

Note that the relation between the recording parameter and the evaluation value may be specified at the time of test recording, or the relation between the recording parameter and the evaluation value may be obtained from data recorded beforehand in the optical disc.

An optical disc recording/playing device according to a third aspect of the present invention includes: means configured to measure a playing signal obtained by playing the result of written or recorded data in an optical disc; means configured to determine whether or not the asymmetry value calculated from the measurement result by the measuring means can be employed for adjustment of recording power; means configured to calculate predetermined statistic according to a peak value which is one of a local maximal value and a local minimal value with the amplitude of a playing signal according to specifying codes from the measurement result by the measuring means, in the case of determining that the asymmetry value cannot be employed for adjustment of recording power; and means configured to decide the recording power based on the predetermined statistic.

Also, an optical disc recording/playing device according to a fourth embodiment of the present invention includes: means configured to measure a playing signal obtained by playing the result of written or recorded in an optical disc; means configured to calculate an evaluation value regarding deviance between the signal state of the playing signal corresponding to a predetermined code pattern and a reference state specified from the predetermined code pattern from the measurement result of the playing signal; and means configured to decide a recording power value corresponding to the predetermined code pattern based on the evaluation value.

Also, an optical disc according to another aspect of the present invention records data beforehand which represents the relation between predetermined statistic according to a peak value which is a local maximal value or local minimal value with the amplitude of a playing signal according to specifying codes, and the recording power of data recording serving as the origin by which the predetermined static is calculated.

Further, an optical disc according to another aspect of the present invention records data beforehand which represents the relation between an evaluation value regarding deviance between the signal state of a playing signal corresponding to a predetermined code pattern and a reference state specified from the predetermined code pattern, and the recording parameter of data recording serving as the origin by which the evaluation value is calculated.

A computer program adapted to cause a processor to execute the recording condition adjusting method of an optical disc recording/playing system according to embodiments of the present invention can be created. The program is stored in, for example, a flexible disk, an optical medium such as CD-ROM or the like, a recording medium such as a magneto-optical disc, semiconductor memory, hard disk, or the like, or nonvolatile memory of a processor. Also, the program is distributed with a digital signal via a network in some cases. Note that data being processed is temporarily saved in a storage device such as the memory of a processor.

According to embodiments of the present invention, recording conditions as to an optical disc can be adjusted appropriately. Also, there can be provided an adjustment technique of recording conditions that serves effectively even with an optical disc recording/playing system for high-density recording/playing. Further, not only recording power but also other recording parameters can be adjusted appropriately.

BRIEF DESCRIPTION OF THE DRAWINGS

Fig. 1 is a function block diagram of an optical disc recording/playing system according to an embodiment of the present invention;

Fig. 2 is a diagram illustrating a processing flow of optimizing processing such as recording power at the time of test recording, or the like;

Fig. 3 is a diagram representing the relation between an asymmetry value and recording.power;

Fig. 4 is a conceptual diagram for describing peak values regarding the amplitude level of an RF signal;

Fig. 5 is a conceptual diagram for describing 2T jitter (difference quantity);

Fig.6 is a conceptual diagram for describing 2T jitter (dispersion);

Fig. 7 is a conceptual diagram representing the relation between 2T jitter (dispersion) and recording power;

Fig. 8 is a diagram illustrating a processing flow of optimizing processing such as recording power at the time of test recording, or the like;

Fig. 9 is a diagram illustrating transitions regarding the amplitude level of a detected signal and an ideal signal;

Fig. 10 is a schematic view illustrating a detection pattern example in the case of adjusting Tefp;

Fig. 11 is a schematic view illustrating a detection pattern example in the case of adjusting Telp;

Fig. 12 is a schematic view representing the pulse relation between Telp and Tefp;

Fig. 13 is a schematic view illustrating a detection pattern example in the case of correcting thermal interference;

Fig. 14 is a schematic view illustrating a detection pattern example in the case of correcting spot interference;

Fig. 15 is a conceptual view representing the relation between Tefp and PRerror_ptn(p);

Fig. 16 is a diagram illustrating a processing flow for adjusting recording power or the like during data recording;

Fig. 17 is a conceptual diagram for describing recording power adjustment using an asymmetry value;

Fig. 18 is a conceptual diagram for describing recording power adjustment using 2T jitter (difference quantity);

Fig. 19 is a diagram illustrating a processing flow of recording parameter correction amount determining processing;

Fig. 20 is a diagram representing the relation between dTtop2T and PRerror_ptn(p); and

Fig. 21 is a diagram illustrating a data configuration example at the time of storing reference data in an optical disc.

DESCRIPTION OF THE PREFERRED EMBODIMENTS

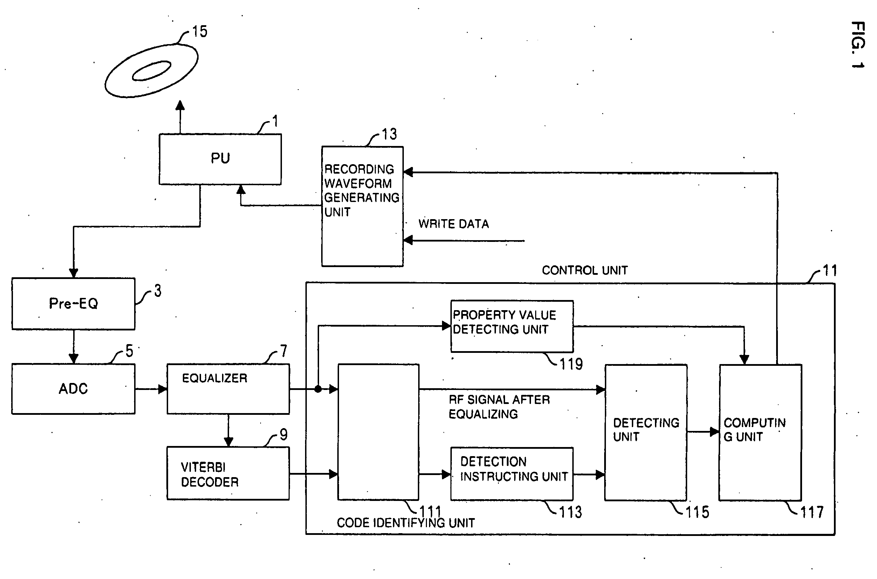

Fig. 1 shows the functional block diagram of an optical disc recording/playing system for high-density recording/playing according to an embodiment of the present invention. An optical disc recording/playing system according to the present embodiment includes an optical unit (PU) 1 for recording/playing by irradiating a laser beam to an optical disc 15, a pre-equalizer (Pre-EQ) 3 for subjecting the electric signal from a photo-detector included in the optical unit 1 to waveform equalizing processing to facilitate conversion into a digital signal at the next step, an ADC (Analog Digital Converter) 5 for converting an analog signal into a digital signal, an equalizer 7 for equalizing the binarized digital signal to a ratio of seven value levels of 0 through 6 of an amplitude level which peaks at the middle position in the length direction of an nT mark as to imperfect frequency response in which intersymbol interference remains, and affected by influence of adjacent nT space as the position thereof is distanced from the middle position, a viterbi decoder 9 for selectively decoding of the playing signal subjected to waveform equalizing by conversion at the equalizer 7 to a most likelihood standard signal stream, and outputting the maximum likelihood decoded signal not affected by noise (signal returned to the binarized digital signal), a control unit 11 for performing processing using the output from the equalizer 7 and viterbi decoder 9, and a recording waveform generating unit 13 for generating a recording waveform for write data according to the setting output from the control unit 11 to output this to the optical unit 1. Note that the optical recording/playing system is, though not shown in the drawing, connected to a display device and a personal computer, and depending on cases, connected to a network to perform communication with a singular or multiple computers or the like.

The control unit 11 includes a code identifying unit 111 for associating a playing RF signal which is the output of the equalizer 7 with the most likelihood decoded data, a detection instructing unit 113 for instructing detection of the signal state of an amplitude level upon detecting the appearance of a predetermined detection pattern based on the code data from the code identifying unit 111, a detecting unit 115 for subjecting the RF signal from the code identifying unit 111 to detection processing in accordance with the instructions from the detection instructing unit 113, a property value detecting unit 119 for extracting data for calculating an asymmetry value and predetermined statistic described below from the playing RF signal which is the output of the equalizer 7, and a computing unit 117 which includes unshown memory, generates a reference state based on the output from the detecting unit 115, performs later-described computation based on the output from the property value detecting unit 119, and perform settings as to the recording waveform generating unit 13. The computing unit 117 is sometimes realized with, for example, a combination of a program for performing functions described below, and a processor. At this time, the program is sometimes stored in the memory of the processor.

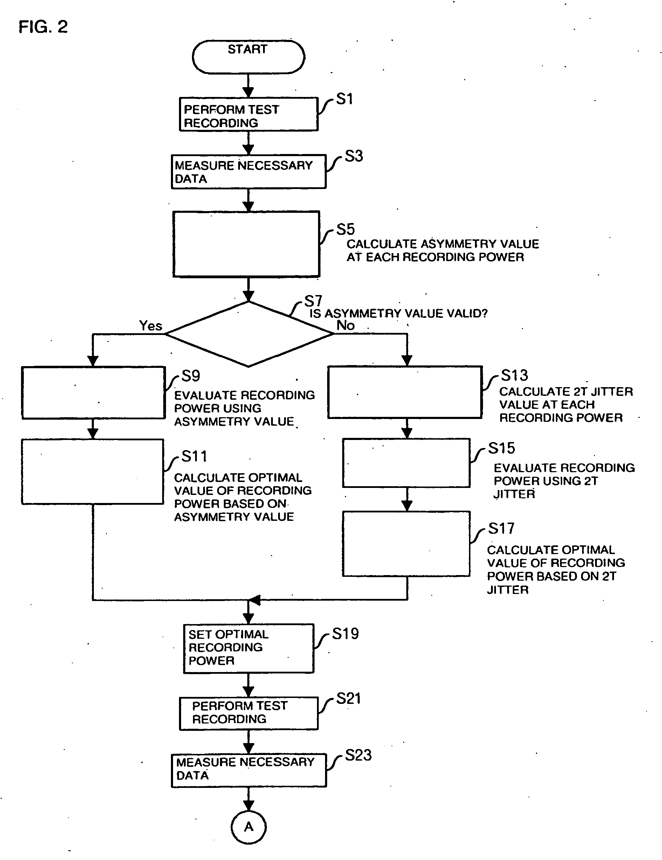

Next, description will be made regarding the processing content of the optical disc recording/playing system with reference to Figs. 2 through 21. First, description will be made regarding recording condition optimizing processing employing a trial writing (PCA) area of a lead-in area provided at the innermost circumference of the optical disc 15, which is performed before data recording.

For example, the computing unit 117 of the control unit 11 sets predetermined recording power to the recording, waveform generating unit 13, and the recording waveform generating unit 13 writes a predetermined recording pattern in the trail writing area of the optical disc 15 via the PU 1 in accordance with the set recording power (step S1). Step S1 is performed multiple times by changing the recording power to be set. Subsequently, the result of writing performed in step S1 is read out using the PU1, pre-equalizer 3, and equalizer 7, measurement of the amplitude levels of specifying codes is performed by the property value detecting unit 119, and the measurement result is output to the computing unit 117 (step S3). As for the specifying codes, 2T codes and 11T codes in the case of the asymmetry value of 2T11T being arrange to be calculated, 2T codes and 3T codes in the case of the asymmetry value of 2T3T being arrange to be calculated, and 3T codes and 11T codes in the case of the asymmetry value of 3T11T being arrange to be calculated are employed. Also, though described below in detail, an evaluation value such as 2T jitter is calculated in the case of an asymmetry value is invalid, so the specifying codes for 2T jitter are 2T codes. Description will be made below regarding 2T jitter.

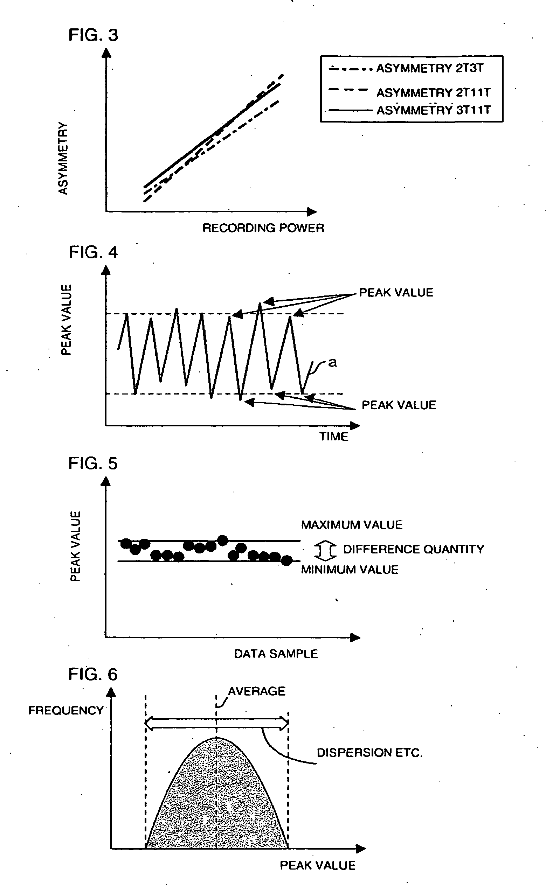

Next, the computing unit 117 calculates an asymmetry value at each recording power (step S5). An asymmetry value is calculated using the amplitude levels of predetermined codes, and is an index value indicating symmetry between the above-described codes. Specifically, the shift amount of the center position of both amplitude levels indicating the above-described code mark and space is calculated based on a predetermined computational expression as an asymmetry value. As for the above-described specifying codes, it is desirable to employ at least two of the shortest code, the code which is long next to the shortest code, and the code of which the amplitude level is the same as that of the longest code. For example, an asymmetry value of 2T11T is calculated. Note however, as described above, an asymmetry value of 3T11T may be calculated, and further, an asymmetry value of 2T3T may be calculated. Further, all of those may be calculated. Asymmetry value is known, so its calculation method will be omitted here. Note that according to the calculation in step S5, for example, the relation shown in Fig. 3 is calculated. In Fig. 3, the vertical axis represents asymmetry values [%], and the horizontal axis represents recording power [mW]. As shown in Fig. 3, a relation such that the asymmetry value is increased accompanied with increase in recording power may be derived, or may not be derived in some cases.

Subsequently, the computing unit 117 determines whether or not the asymmetry value calculated in step S5 is valid for adjustment of recording power (step S7). In step S5, the corresponding asymmetry values are calculated as to a plurality of recording power, so the correlation coefficient between recording power and an asymmetry value is calculated, thereby determining whether or not there is a correlation between both.

With an optical disc for high-density recording/playing, there is no correlation between an asymmetry value and recording power, or a correlation sufficient for recording power control cannot be obtained in some cases, and there have been observed many cases wherein recording power cannot be adjusted based on an asymmetry value.

In the event that there is a correlation such as shown in Fig. 3, recording power can be adjusted with an asymmetry value, so the computing unit 117 evaluates recording power with an asymmetry value (step S9). For example, a recursion calculation is performed to specify a function representing the relation between an asymmetry value and recording power.

Subsequently, the computing unit 117 calculates the optimal value of recording power based on an asymmetry value (step S11). Specifically, recording power which becomes the target value (e.g., 0) of an asymmetry value is specified as the most appropriate recording power. Note that in the case of multiple asymmetry values being calculated, an asymmetry value having the highest correlation may be employed, or recording power which brings the multiple asymmetry values close to zero most may be specified. Subsequently, the calculated optimal recording power is set to the recording waveform generating unit 13 (step S19).

On the other hand, in the case of determining that there is no correlation between an asymmetry value and recording power which is at or above a predetermined level, the computing unit 117 calculates the value of 2T jitter (such as the maximum value and minimum value of peak values, and difference quantity, dispersion, which will be described later, etc.) at each recording power using the measurement result in step S3 (step S13).

Description will be made regarding the processing in step S13 with reference to Figs. 4 through 7. In step S3, the peak values of the amplitudes of specifying codes, i.e., 2T codes here are measured, and saved in the memory, for step S13, and will be used when calculating the value of 2T jitter. Description will be made here regarding the peak values of amplitudes.

Fig. 4 illustrates a conceptual diagram of a playing signal a (RF signal) at the time of recording a consecutive pattern of 2T codes alone, which are particular signal codes, for example. 2T codes denote 2T marks and 2T spaces. The vertical axis in Fig. 4 represents peak values [V], and the horizontal axis represents time corresponding to playing. Let us say that the condition for signal detection is "Low to High". With the present embodiment, the amplitude value of the playing signal of one 2T mark becomes a local maximal value (protruding), and the amplitude of the playing signal of one 2T space becomes a local minimal value (recessed). Let us say that one of these amplitude values is the peak value of amplitudes. Note that in the case of assuming that signal detection is performed with the condition of "Low to High" and a particular single code, the amplitude of the playing signal of a space becomes a local maximal value (protruding), and the amplitude of the playing signal of a mark becomes a local minimal value (recessed). That is to say, the relation between the local maximum and local minimum of amplitude values is inverted as to that in the case of the condition of "Low to High".

The peak value of the amplitude of such a playing signal necessarily indicates not a fixed value but a value with variations, as shown in Fig. 4. With a playing signal at the time of recording with a recording pattern including multiple codes, instead of a consecutive pattern of a single code as described above, the peak value of an amplitude is readily changed due to influence of the previous or next code pattern. Further, as to the optical disc 15 for performing data recording, the thermal behavior and distribution at the time of performing recording cannot become even readily due to the irradiation power of a laser beam to be irradiated being greater than or less than the optimum amount, which can become a change (variation) cause of the peak value of an amplitude.

Note that in Fig. 4, a playing signal at the time of recording a consecutive pattern of a single code has been shown on the convenience of explanation, but with the present embodiment, even the case of performing recording with a recording pattern including multiple codes in the same way as with actual data recording, e.g., random pattern, or a pattern where a great number of codes are arrayed in a predetermined order can be handled without problems, and in this case, a playing signal according to a specifying code from which the peak value of an amplitude is desired to be obtained is detected from the pattern including multiple codes, and the peak value of an amplitude is specified by this detected playing signal.

Further, with the present embodiment, the difference quantity of the maximum value and minimum value at the peak values of amplitudes of a playing signal of one of the mark or space of the 2T codes is calculated as the value of 2T jitter. As shown in Fig. 5, there are irregularities when arraying the peak values of amplitudes of a playing signal, for example, according to 2T which is a specifying code, the maximum value and minimum value are detected from the peak values thereof, and the difference quantity thereof is calculated as the value of 2T jitter.

Note that not only difference quantity but also the other statistic, for example, of the peak values of amplitudes of 2T codes which are specifying codes, in particular, dispersion, mean deviation (average absolute value of deviation), and standard deviation may be employed.

As shown in Fig. 6, even if the recording condition including recording power is the same, there are irregularities from the perspective of the occurrence frequency of the peak values of amplitudes of a playing signal according to 2T as a specifying code for example. Therefore, the value corresponding to irregularities such as dispersion, mean deviation, or the like may be calculated as the value of 2T jitter.

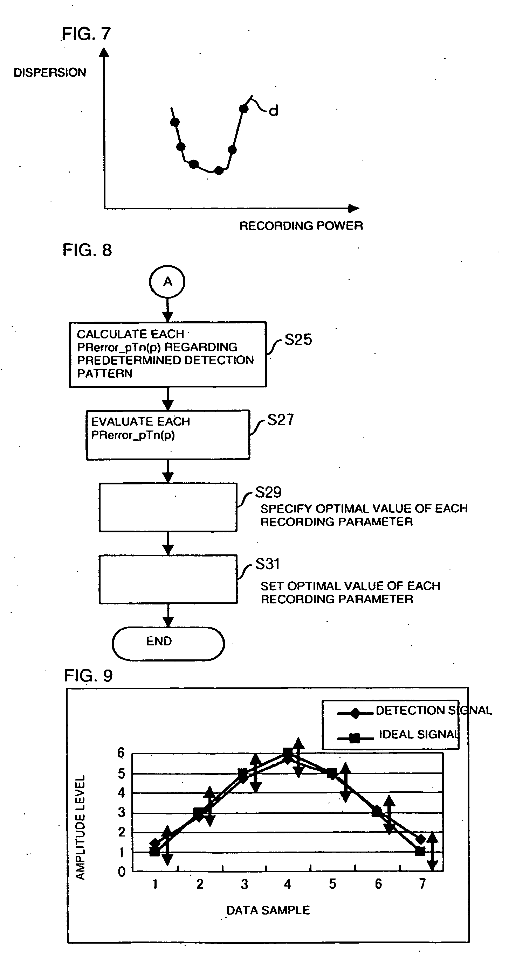

Now, description will be returned to Fig. 2, where the computing unit 117 evaluates recording power with 2T jitter (step S15). Even in the case of 2T jitter being the difference quantity of peak values, or even in the case of dispersion or the like, as shown in Fig. 7, the relation between recording power and the dispersion of 2T jitter is represented with a function d similar to a quadratic function. Accordingly, a recursion calculation is performed, for example, as a quadratic function.

Subsequently, the computing unit 117 calculates the optimal value of recording power based on 2T jitter (step S17). That is to say, with the quadratic function obtained in step S15, the recording power which causes the value of 2T jitter to be the minimum can be specified. Note that the peak value of 2T codes at the optimal recording power is held, and is employed for recording power adjustment during data recording. Further, there is a need to understand and hold in the memory property data such as whether the peak value of 2T codes becomes great or small in the case of the recording power being greater than the optimal recording power, or whether the peak value of 2T codes becomes great or small in the case of the recording power being smaller than the optimal recording power, and this is employed for recording power adjustment during data recording. Also, the recording power which causes the value of 2T jitter to be the minimum may be specified without performing a recursion calculation. Subsequently, the calculated optimal recording power is set to the recording waveform generating unit 13 (step S19).

Thus, the recording power is now in an optimal state, optimizing of the recording parameters can be performed next. Accordingly, the computing unit 117 sets, in an optimal recording power state, the specified value of a recording parameter to be adjusted in the recording waveform generating unit 13, and the recording waveform generating unit 13 writes a predetermined recording pattern in the trial writing area of the optical disc 15 via the PU 1 in accordance with the set recording parameter (step S21). Step S21 is performed multiple times by changing the set recording parameter.

Subsequently, measurement of necessary data is performed (step S23). Specifically, the writing result performed in step S21 is read using the PU1,pre-equalizer 3, equalizer 7, and viterbi decoder 9, the output of the equalizer 7 is associated with the output of the viterbi decoder 9 using the code identifying unit 111. In the case of detecting a detection pattern p (detected code [T] stream) corresponding to the recording parameter to be adjusted, the detection instructing unit 113 instructs the detecting unit 115 to detect a RF signal amplitude level. The detecting unit 115 detects the amplitude level of a RF signal in accordance with the detection instructing unit 113, and outputs the detection result to the computing unit 117. Also, in step S23, the computing unit 117 stores the amplitude levels regarding the detection pattern p. The peak values alone may be stored. The processing proceeds to Fig. 8 via a terminal A.

Subsequently, the computing unit 117 calculates PRerror_ptn(p) regarding the detection pattern p corresponding to the recording parameter to be adjusted, and stores this in a storage device such as memory or the like (step S25).

Now, description will be made regarding PRerror_ptn(p). For example, the amplitude levels in the case of reading a pattern where 3T-length spaces (also referred to as lands) are adjacent to each other at both sides of a 4T-length mark (also referred to as a pit) are shown in Fig. 9. In Fig. 9, the vertical axis represents an amplitude level, and the horizontal axis represents the order of data samples. The ideal detection signal (ideal signal) having a pattern such as described is 1, 3, 5, 6, 5, 3, and 1 in the case of employing PR(1, 2, 2, 1) which is employed for Blu-ray specifications. On the other hand, an actual detection signal depends on, as shown in Fig. 9, hardware, medium (also referred to disc), and recording conditions, and deviance is caused as to an ideal state. Therefore, the deviance quantity between an ideal signal and a detected signal is quantized using Expression (1) to perform evaluation of a recorded state.

$$PRerror\_ptn(p) = \sqrt{\left\{ \sum_{x=a}^{a+n-1} (D(x) - R(x))^2 \right\} / n} \quad (1)$$

Here, D(x) represents the value of a detected signal, R(x) represents the value of an ideal signal, x represents a data profile number, a represents a computation starting data number, n represents the number of computation data samples, and p represents a recording pattern type (number).

Note that PR(1, 2, 2, 2, 1) or the like employed for HD-DVD specifications may be employed instead of the PR (1, 2, 2, and 1) of Blu-ray specifications. Also, an example is shown in the optical disc condition wherein the reflection light amount at a mark portion is greater than the reflection light amount at a space portion, but an optical disc condition may be employed wherein the reflection light amount at a mark portion is smaller than the reflection light amount at a space portion. Further, the above-described patterns are an example, so another pattern can be evaluated with Expression (1).

For example, PRerror_ptn(p) is calculated using seven points centered on the peak value with a = 1 and n = 7, but PRerror_ptn(p) may be calculated with three points centered on the peak value such that a = 3 and also n = 3. Also, p is a number assigned for specifying a recording pattern, and the number thereof is the number of recording patterns necessary for evaluation, which also changes depending on whether or not the increment configuration of a recording pattern is defined as how many number of code arrays. Also, with the example in Fig. 9, one recording pattern is configured of space mark space, or mark space mark, but may be configured of a combination other than that.

Further, in Expression (1), computation is shown in the event that the recording pattern p is detected once, but actually, it is desirable to obtain the mean value of multiple values (cnt(p)) in light of influence of recording or detection irregularities. The cnt(P) is the number of detection counts of the recording pattern p obtained from sample data of a predetermined length, and in order to derive the value of the ultimate PRerror_ptn(p), it is desirable to store PRerror_ptn(p) calculated for each detection in the memory as PRerror_ptn(p, cnt(P)), and employ the average thereof.

Also, examples of the recording parameters to be adjusted include the leading portion (Tefp), trailing portion (Telp), intermediate pulse (Tmp), top pulse (Ttop), and cleaning pulse (Tlc) of a recording pulse. Note that the recording parameters to be adjusted may be recording power conditions (PeakPW, BiasPW, BottomPW). Further, the recording parameters to be adjusted may be thermal interference caused due to the land length between marks, or spot interference (playing interference) caused due to a spot valid diameter and a code pattern.

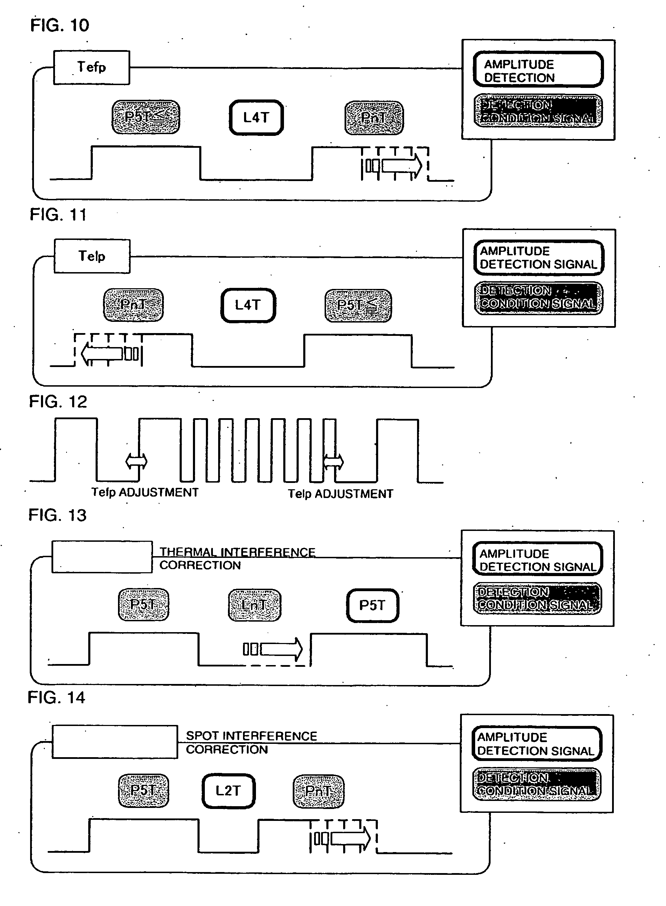

Each recording parameter is correlated with the detection pattern p to be detected. Specifically, in the case of Tefp, as shown in Fig. 10, with regard to the detection pattern, it is desirable to make up the detection pattern with a code making up the center of the pattern, i.e., with the example in Fig. 10, a space 4T (L4T), and the codes preceding the space 4T, i.e., with the example in Fig. 10, a mark 5T or more (P5T or more), and the code following those codes, i.e., with the example in Fig. 10, a mark nT (n is an arbitrary integer). Also, in the case of Telp, with regard to the detection pattern, as shown in Fig. 11, it is desirable to employ a pattern wherein the preceding codes adjacent to the code making up the center of the pattern are replaced with the detection condition signal of the succeeding code as to the case of Tefp. Such a detection pattern is detected, and the-above-described PRerror_ptn(p) is calculated, whereby Tefp and Telp can be adjusted, as shown in Fig. 12.

Further, in the case of influence of thermal interference caused due to the land length between marks being subjected to adjustment, as shown in Fig. 13, as the detection pattern it is desirable to employ a pattern made up of the detection signal of the amplitude level of a variable-length space nT (LnT), a mark 5T of the preceding code adjacent to the detection signal of the amplitude level (P5T), and a mark 5T of the succeeding code adjacent to the detection signal of the amplitude level (P5T).

Also, in the case of spot interference caused due to the spot valid diameter and code pattern being subjected to adjustment, as shown in Fig. 14, it is desirable to employ a short land code condition, e.g., with the example in Fig. 14, a pattern made up of a space 2T (L2T) serving as an amplitude detected signal, a mark 5T (P5T) serving as the preceding code thereof, and a mark nT serving as the succeeding code thereof.

The other recording parameters are also correlated with detection patterns beforehand, and PRerror_ptn(p) is calculated regarding necessary detection patterns. Note that basically, PRerror_ptn(p) is calculated at the portion of the detected signal of an amplitude level, but a part of the amplitude level of the adjacent preceding code or succeeding code or the like may be employed for computation of PRerror_ptn(p).

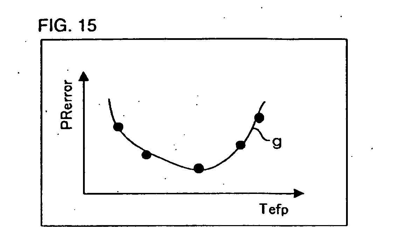

Subsequently, the computing unit 117 evaluates each PRerror_ptn(p) regarding each value of the recording parameters (step S27). As shown in Fig. 15, for example, the relation between the recording parameter Tefp and PRerror_ptn(p) is represented with a function g similar to a quadratic function. Accordingly, for example, a recursion calculation is performed as a quadratic function. Note that in the case of multiple recording parameters to be adjusted existing, the relation such as shown in Fig. 15 is specified regarding each recording parameter.

Subsequently, the computing unit 117 calculates the optimal value of each recording parameter based on the value of PRerror_ptn(p) (step S29). That is to say, with the quadratic function obtained in step S27, the value of each recording parameter which causes the value of PRerror_ptn(p) to be the minimum is specified. Note that the data of the amplitude level at the optimal value of each recording parameter is held, and is employed for recording power adjustment during data recording. As described below, whether the amplitude level increases or decreases when the value of each recording parameter increases is also detected and held. Also, the value of each recording parameter which causes the value of actual PRerror_ptn(p) to be the minimum may be specified without performing a recursion calculation. Subsequently, the computing unit 117 sets the calculated optimal value of each recording parameter to the recording waveform generating unit 13 (step S31).

According to the above-described processing, with test recording performed before data recording, optimal values can be set to recording power and recording parameters, and also data necessary for adjustment during data recording, which will be described below, can be obtained.

Note that with the above-described processing flow, an example has been shown wherein following an asymmetry value being calculated, determination is made regarding whether or not the asymmetry value is valid, but in the case of determining that the asymmetry value is invalid, the asymmetry value cannot be determined to be valid even with the adjustment processing during data recording, so data representing that the asymmetry value is invalid is registered in the memory. Also, with regard to a particular medium, the asymmetry value is determined to be invalid beforehand in some cases. An arrangement may be made wherein the media ID of such a medium is registered in a list of the memory beforehand, and determination is made that the asymmetry value is invalid simply by referencing the media ID without calculating the asymmetry value. Further, an arrangement may be made wherein data regarding the validity of an asymmetry value is held in each medium, and first, determination is made regarding whether or not the asymmetry value is calculated with reference to the data.

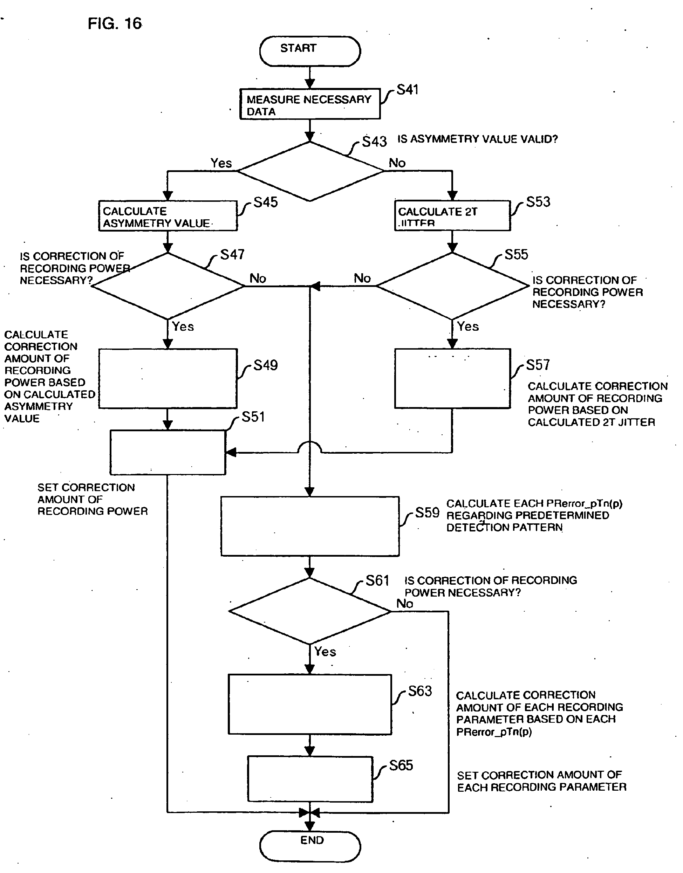

Next, the processing of adjustment processing during data recording will be described with reference to Figs. 16 through 20. We will say that the processing flow in Fig. 16 is to be performed after data recording has been performed by predetermined time, or after a predetermined amount of data has been written in.

First, the result of data recording is read by the PU1, pre-equalizer 3, and equalizer 7, measurement of the amplitude level of a specifying code is performed by the property value detecting unit 119, and the measurement result is output to the computing unit 117. As for the specifying codes, 2T codes and 11T codes in the case of the asymmetry value of 2T11T being arranged to be calculated, 2T codes and 3T codes in the case of the asymmetry value of 2T3T being arranged to be calculated, and 3T codes and 11T codes in the case of the asymmetry value of 3T11T being arranged to be calculated. Note that in the case wherein the asymmetry value has already been determined to be invalid with the above-described processing or the like, and the result thereof can be employed, measurement of data necessary for the asymmetry value thereof may be omitted. Also, in the case of the asymmetry value being invalid, 2T jitter is calculated, but the specifying codes for 2T jitter are 2T codes.

Further, the result of data recording is read by the PU 1, pre-equalizer 3, equalizer 7, and viterbi decoder 9, and the output of the equalizer 7 is correlated with the output of the viterbi decoder 9 by the code identifying unit 111. In the case of detecting the detection pattern p corresponding to the recording parameter to be adjusted, the detection instructing unit 113 instructs the detecting unit 115 to detect the amplitude level of a RF signal. The detecting unit 115 detects the amplitude level of the RF signal in accordance with the detection instructing unit 113, and outputs the detection result to the computing unit 117 (step S41).

Subsequently, the computing unit 117 determines whether or not the asymmetry value is valid (step S43). For example, determination may be made using the result of the processing performed before data recording, or determination may be made based on the corresponding media ID. In the case of the asymmetry value being valid, the computing unit 117 calculates the asymmetry value (step S45). Subsequently, for example, determination is made regarding whether or not the difference between the calculated asymmetry value and a target value, e.g., the difference between the calculated asymmetry value and zero is at or above a predetermined threshold value, thereby determining whether or not correction of recording power is necessary (step S47). For example, in the case of the target value being zero, determination is made with the threshold values as the two values sandwiching the target value in some cases. In the case of determining that there is no need to perform correction of recording power, the processing proceeds to step S59.

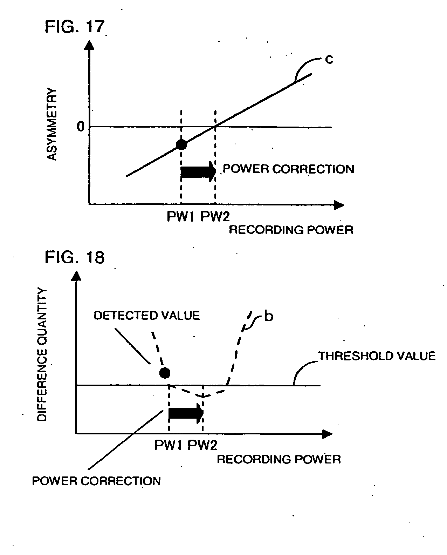

On the other hand, in the case of determining that there is a need to perform correction, the correction amount of recording power is calculated based on the asymmetry value calculated in step S45 (step S49). Specifically, as shown in Fig. 17, the relation between recording power and the asymmetry value has already been obtained, such as shown by the straight line c, so the difference between the recording power PW1 corresponding to the asymmetry value calculated in step S45 and the recording power PW2 at the asymmetry value = 0 (target value) is calculated as the correction amount.

Subsequently, the computing unit 117 sets the calculated correction amount of the recording power to the recording waveform generating unit 13 (step S51). Subsequently, the processing ends. Here, under the policy of not performing adjustment of the recording parameters unless adjustment of recording parameter is completed, an arrangement is made wherein determination is made regarding whether or not there is correction of recording power again after the next data recording is performed, and in the case of no correction of recording power, adjustment of recording parameters is performed. Note however, the processing may proceed to step S59 from step S51.

On the other hand, in the case of the asymmetry value being invalid, the computing unit 117 calculates the value of 2T jitter described above from the measurement result in step S41, i.e., statistic such as the difference quantity or dispersion of the peak values of 2T codes (step S53). Subsequently, determination is made regarding whether or not the value of 2T jitter exceeds a predetermined threshold value, whereby the computing unit 117 determines whether or not correction of recording power is necessary (step S55). In the case of determining that the value of 2T jitter does not exceed a predetermined threshold value, the processing proceeds to step S59 with the correction being regarded as being unnecessary.

On the other hand, in the case of determining that the value of 2T jitter exceeds a predetermined threshold value, the computing unit 117 calculates the correction amount of recording power based on 2T jitter (step S57). For example, as shown in Fig. 18, the relation between recording power and 2T jitter (difference quantity here) has already been obtained, such as shown in the curve b, so in the case of 2T jitter (detected value) exceeding the threshold value being obtained, the correction amount is calculated wherein the recording power PW1 at that time is corrected so as to obtain recording power PW2 which causes the difference quantity to be the minimum at the curve b.

Note however, as can be understood from Fig. 18, the curve b is similar to a quadratic function, so upon difference quantity being specified, two corresponding recording power values are obtained. The correction direction differs depending on which recording power the true solution is. Therefore, of the peak values of 2T codes which were the fundamentals for calculating 2T jitter in step S41, e.g., the mean value thereof is held, and is compared with the peak value of 2T codes at the optimal recording power stored in the memory in step S17. Subsequently, determination is made which solution should be employed based on the property data held in the memory similarly in step S17. For example, in the case of property data being held wherein in the case of the peak value of 2T codes which was the fundamental for calculating 2T jitter in step S41 being greater than the peak value of 2T codes at the optimal recording power, and in the case of the recording power being greater than the optimal recording power, the peak value of 2T codes becomes great, it can be found that the recording power is too high, i.e., the current recording power is greater than the optimal recording power. On the other hand, in the case of property data being held wherein in the case of the peak value of 2T codes which was the fundamental for calculating 2T jitter in step S41 being smaller than the peak value of 2T codes at the optimal recording power, and in the case of the recording power being greater than the optimal recording power, the peak value of 2T codes becomes great, it can be found that the recording power is too low, i.e., the current recording power is smaller than the optimal recording power.

Subsequently, the processing proceeds to step S51 from step S57, and then the processing ends.

On the other hand, in the case of determination being made in step S47 or step S55 that correction of recording power is unnecessary, the computing unit 117 calculates PRerror_ptn(p) regarding a predetermined detection pattern p corresponding to the recording parameters to be adjusted, and stores this in a storage device such as memory (step S59). As described above, the detection pattern p is detected repeatedly, so the mean value is calculated regarding PRerror_ptn(p). Also, the computing unit 117 stores the amplitude levels regarding a particular detection pattern p employed later. Alternatively, the computing unit 117 may store the peak values alone.

Subsequently, the computing unit 117 compares a predetermined threshold value regarding each detection pattern p and the calculated value of PRerror_ptn(p), and determines whether or not correction as to each recording power is necessary (step S61). Specifically, determination is made regarding whether or not PRerror_ptn(p) exceeds the corresponding threshold value. With regard to the recording parameters according to PRerror_ptn(p) not exceeding the threshold value, adjustment is unnecessary, so the processing ends.

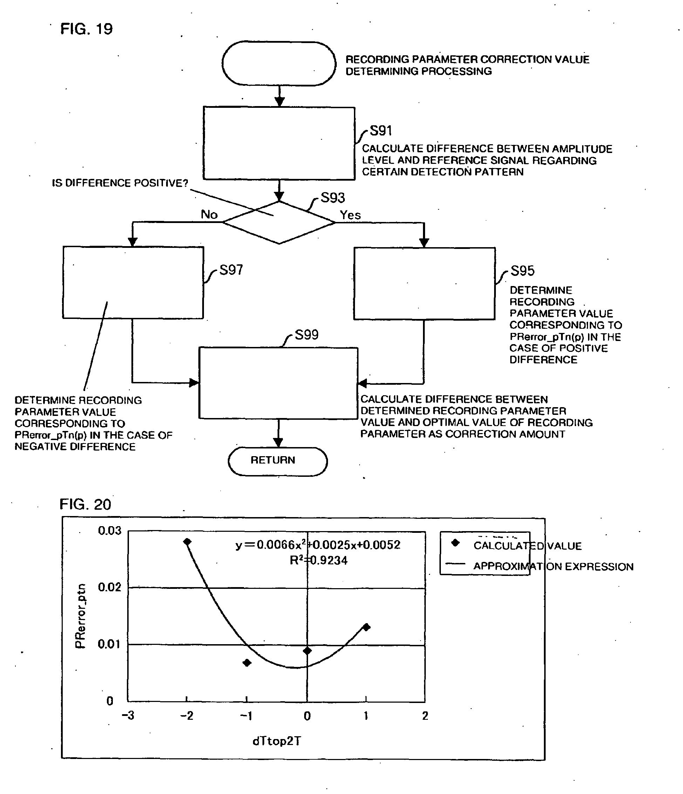

With regard to the recording parameters according to PRerror_ptn(p) exceeding the threshold value, the computing unit 117 calculates the correction amount of each recording parameter to be corrected based on each PRerror_ptn(p) (step S63). Specifically, the computing unit 117 performs processing (Fig. 19) such as shown in below.

First, the computing unit 117 calculates the difference between the amplitude level regarding a particular detection pattern p, and for example, the amplitude level specified in step S59 (step S91). As described above, the difference between peak values may be calculated, or the difference between portions other than peaks may be added. Note that determination is made in step S61 that correction is necessary, so let us say that the above-described difference never becomes zero.

Subsequently, the computing unit 117 determines whether the difference is positive (step S93). In the case of the difference being positive, the computing unit 117 specifies the value of the recording parameter corresponding to the value of PRerror_ptn(p) specified in step S59 from the positive difference, and the relation between PRerror_ptn(p) and the recording parameter (the results in steps S25 and S27) (step S95).

Description will be made regarding the case of a recording parameter called dTtop2T is a recording parameter to be adjusted, as shown in Fig. 20.

Now, description will be made first regarding dTtop2T. First, when writing a signal in an optical disc as codes, writing is performed while controlling recording power which is the intensity of a laser beam, which has already been described. Of the marks of length nT codes, in order to write a mark having a length at or above the length of a 3T mark, a laser beam is not converted into a simple rectangular pulse but divided into multiple short rectangular pulses to perform thermal control, and thermal remains at the end of writing in some cases. A method for operating with modulated waveforms at the time of thus performing writing is referred to as write strategy. Also, irradiation of a laser beam at the beginning of writing is performed while controlling the shift amount before and after the start position of the top pulse, i.e., the reference position (0) of dTtop so that a mark having a length nT can be written with a certain width from a position aimed at. Accordingly, the term dTtop2T is a numeric value indicating the start position of the top pulse of a 2T mark in the write strategy.

In the case such as shown in Fig. 20, the value of PRerror_ptn(p) becomes the minimum in the case of dTtop2T being around -0.1, and increases even if dTtop2T decreases or increases. Therefore, in the case of the value of PRerror_ptn(p) calculated in step S59 being 0.01 for example, the corresponding dTtop2T becomes either around -1 or around 0.7. The correction direction and correction amount differ depending on whether the value is either around -1 or around 0.7. In the case of around -1, the corresponding dTtop2T is increased by 0.9, and in the case of around 0.7, the corresponding dTtop2T is decreased by 0.8. Whether the value is either around -1 or around 0.7 is determined with at least one condition of the property, recording condition, and detection pattern of a medium where data recording is performed. With regard to the property of a medium, it is desirable to determine as follows. For example, the amplitude levels regarding the detection pattern p regarding each value of the recording parameters are stored in step S25, but step S25 is executed several times, at each of which discrimination is made regarding whether the amplitude increases or decreases when the recording parameter increases, and the discrimination result is held and employed. For example, in the case of determination is made from the discrimination result that the amplitude level increases according to increase in dTtop2T, and also the above-described difference is positive, determination can be made that dTtop2T is too high, i.e., the same state as around 0.7. Accordingly, in this case, dTtop2T is decreased by 0.8. On the other hand, in the case of determination is made from the discrimination result that the amplitude level decreases according to increase in dTtop2T, and also the above-described difference is positive, determination can be made that dTtop2T is too low, i.e., the same state as around -1. Accordingly, in this case, dTtop2T is increased by 0.9. Such a relation is specified beforehand, and determination is made in step S95 regarding whether to correspond to any recording condition.

Subsequently, the computing unit 117 calculates the difference between the specified value of a recording parameter and the optimal value of a recording parameter as the correction amount (step S99). Subsequently, the processing returns to the original processing.

On the other hand, in the'case of the difference being negative, the computing unit 117 specifies the value of the recording parameter corresponding to the value of PRerror_ptn(p) from the negative difference, and the relation between PRerror_ptn(p) and the recording parameter(step S97). For example, in the case of determination is made from the discrimination result in advance that the amplitude level increases according to increase in dTtop2T, and also the above-described difference is negative, determination can be made that dTtop2T is too low, i.e., the same state as around -1. Accordingly, in this case, dTtop2T is increased by 0.9. On the other hand, in the case of determination is made from the discrimination result in advance that the amplitude level decreases according to increase in dTtop2T, and also the above-described difference is negative, determination can be made that dTtop2T is too high, i.e., the same state as around - 0.7. Accordingly, in this case, dTtop2T is decreased by 0.8. Such a relation is specified beforehand, and determination is made in step S97 regarding whether to correspond to any recording condition. Subsequently, the processing proceeds to step S99.

Returning to the description in Fig. 16, the computing unit 117 sets the correction amount of each recording parameter calculated in step S63 to the recording waveform generating unit 13 (step S65). Subsequently, the processing ends.

According to such processing being performed, suitable data recording can be realized by adjusting recording power or recording parameters even during data recording. Let us say that recording power is adjusted in preference to recording parameters even during data recording, and in the case of the recording power being in a suitable state, correction is also performed regarding recording parameters. Note however, correction is also performed regarding recording parameters using the data measured with recording power in an unsuitable state in some cases.

Description has been made regarding embodiments of the present invention, but the present invention is not restricted to those. For example, the function block diagram shown in Fig. 1 is an example, which does not necessarily correspond to an actual module configuration in some cases.

Further, the above-described processing flow may be modified as necessary in some cases. In particular, optimizing of recording power or the like at the time of test recording being performed using another method, or only the processing during data recording being performed using reference data such as the threshold value, the target value, and so forth, which are held beforehand in some cases.

Also, Fig. 16 illustrates the case of interrupting data recording temporarily, but recording conditions and recording parameters may be adjusted in parallel with data recording.

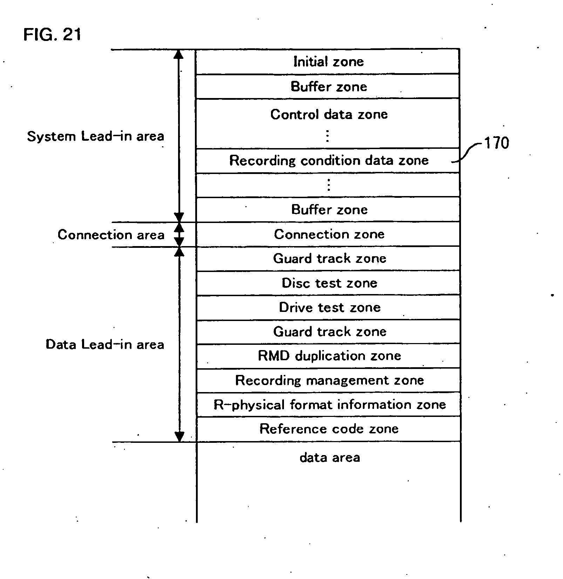

With the above-described embodiments, an example is shown wherein the reference data such as the threshold employed for the adjustment processing of recording conditions or the like during data recording is stored in the memory embedded in the computing unit 117, or external memory of the computing unit 117, but the reference data does not necessarily have to be stored in the memory. For example, the reference data may be held in the optical disc 15. In the case of holding the reference data in the optical disc 15, the reference data is held in a Lead-in area such as shown in Fig. 21. The Lead-in area is principally divided into a system Lead-in area, a connection area, and a data Lead-in area, and the system Lead-in area includes an initial zone, buffer zone, control zone, and buffer zone. Also, the connection area includes a connection zone. Further, the data Lead-in area includes a guard track zone, disc test zone, drive test zone, guard track zone, RMD duplication zone, recording management zone, R-physical format information zone, and reference code zone. With the present embodiment, the control data zone of the system Lead-in area is arranged to include a recording condition data zone 170.

The reference data, which has been described as being held in the memory in the above description, is held in the recording condition data zone 170, and is read out as necessary. With regard to the values to be recorded, the average values of the optical disc 15 may be registered uniformly, or the values corresponding to the tests before shipment regarding the optical disc 15 may be registered.

The values corresponding to the optical disc 15 wherein recording is thus performed are held in the optical disc 15, whereby the processing load at the drive side can be decreased in some cases. Note that the values held in the optical disc 15 are modified and employed as necessary in some cases.

**Claims**

1.    A recording power condition adjusting method of an optical disc recording/playing system, including the steps of:

   measuring a playing signal obtained by playing the result of a span of written or recorded data in an optical disc (15) ;
   determining whether or not the asymmetry value calculated from the measurement result of said measuring step can be employed for adjustment of recording power;
   calculating predetermined statistic according to a peak value which is one of a local maximal value and a local minimal value with the amplitude of a playing signal according to specifying codes from the measurement result in said measuring step, in the case of determining that said asymmetry value cannot be employed for adjustment of recording power; and
   deciding said recording power based on said predetermined statistic.

2.    The recording condition adjusting method of an optical disc recording/playing system according to Claim 1, wherein said predetermined statistic is the difference quantity between the maximum value and minimum value of said peak values.

3.    The recording condition adjusting method of an optical disc recording/playing system according to Claim 1, wherein said predetermined statistic is the dispersion of said peak values.

4.    The recording condition adjusting method of an optical disc recording/playing system according to Claim 1, said determining step including the step of:

   determining whether or not with media IDs enumerated in said optical disc beforehand, said asymmetry value cannot be employed for adjustment of recording power.

5.    The recording condition adjusting method of an optical disc recording/playing system according to Claim 1, said deciding step including the step of:

   specifying optimal recording power from the relation between said recording power and said predetermined statistic, which is specified from said predetermined statistic corresponding to a plurality of said recording power.

6.    The recording condition adjusting method of an optical disc recording/playing system according to Claim 1, said deciding step including the step of:

   calculating correction amount as to said recording power at the present moment from the relation between said recording power and said predetermined statistic, which is specified from said predetermined statistic corresponding to a plurality of said recording power.

7.    The recording condition adjusting method of an optical disc recording/playing system according to Claim 5 or 6, wherein the relation between said recording power and said predetermined statistic is obtained at the time of test recording.

8.    The recording condition adjusting method of an optical disc recording/playing system according to Claim 5 or 6, wherein the relation between said recording power and said predetermined statistic is obtained from data recorded beforehand in said optical disc.

9.    A recording power condition adjusting method of an optical disc recording/playing system, including the steps of:

measuring a playing signal obtained by playing the result of a span of written or recorded data in an optical disc;

calculating an evaluation value regarding deviance between the signal state of said playing signal corresponding to a predetermined code pattern and a reference state specified from said predetermined code pattern from the measurement result in said measuring step; and

deciding a recording power value corresponding to said predetermined code pattern based on said evaluation value.

10. The recording condition adjusting method of an optical disc recording/playing system according to Claim 9, said deciding step including the step of:

specifying the optimal value of said recording parameter based on the relation between said recording parameter and said evaluation value, which is specified from said evaluation value corresponding to the multiple values of said recording parameter.

11. The recording condition adjusting method of an optical disc recording/playing system according to Claim 9, said deciding step including the step of:

calculating the correction amount of the current value of said recording parameter based on the relation between said recording parameter and said evaluation value, which is specified from said evaluation value corresponding to the multiple values of said recording parameter.

12. The recording condition adjusting method of an optical disc recording/playing system according to Claim 10 or Claim 11, wherein the relation between said recording parameter and said evaluation value is specified at the time of test recording.

13. The recording condition adjusting method of an optical disc recording/playing system according to Claim 10 or Claim 11, wherein the relation between said recording parameter and said evaluation value is obtained from data recorded beforehand in said optical disc.

14. An optical disc recording/playing device comprising:

means (115) configured to measure a playing signal obtained by playing the result of a span of written or recorded data in an optical disc;

means (117) configured to determine whether or not the asymmetry value calculated from the measurement result by said measuring means can be employed for adjustment of recording power;

means (117) configured to calculate predetermined statistic according to a peak value which is one of a local maximal value and a local minimal value with the amplitude of a playing signal according to specifying codes from the measurement result by said measuring means, in the case of determining that said asymmetry value cannot be employed for adjustment of recording power; and

means (117) configured to decide said recording power based on said predetermined statistic.

15. An optical disc recording/playing device comprising:

means (115) configured to measure a playing signal obtained by playing the result of a span of written or recorded data in an optical disc;

means (117) configured to calculate an evaluation value regarding deviance between the signal state of said playing signal corresponding to a predetermined code pattern and a reference state specified from said predetermined code pattern from the measurement result of said playing signal; and

means (117) configured to decide a recording power value corresponding to said predetermined code pattern based on said evaluation value.

16. A computer program adapted to cause a processor to execute the steps of:

measuring a playing signal obtained by playing the result of a span of written or recorded data in an optical disc (15);

determining whether or not the asymmetry value calculated from the measurement result of said measuring step can be employed for adjustment of recording power;

calculating predetermined statistic according to a peak value which is one of a local maximal value and a local minimal value with the amplitude of a playing signal according to specifying codes from the measurement result in said measuring step, in the case of determining that said asymmetry value cannot be employed for adjustment of recording power; and
deciding said recording power based on said predetermined statistic.

17. The program, according to Claim 16 causing a processor to further execute the step of:

saving said predetermined statistic calculated in said calculating step in a manner correlated with said recording power.

18. A computer program adapted to cause a processor to execute the steps of:

measuring a playing signal obtained by playing the result of a span of written or recorded data in an optical disc;
calculating an evaluation value regarding deviance between the signal state of said playing signal corresponding to a predetermined code pattern and a reference state specified from said predetermined code pattern from the measurement result in said measuring step; and
deciding a recording power value corresponding to said predetermined code pattern based on said evaluation value.

19. The program according to Claim 18 causing a processor to further execute the step of:

saving said evaluation value calculated in said calculating step in a manner correlated with said recording power.

20. A processor storing the program described in any one of Claims 16 through 19 in memory.

21. An optical disc (15), for use with the optical disc recording/playing device of claim 14, configured to record data beforehand which represents the relation between predetermined statistic according to a peak value which is a local maximal value or local minimal value with the amplitude of a playing signal according to specifying codes, and the recording power of data recording serving as the origin by which said predetermined statistic is calculated.

22. An optical disc (15), for use with the optical disc recording/playing device of claim 15, configured to record data beforehand which represents the relation between an evaluation value regarding deviance between the signal state of a playing signal corresponding to a predetermined code pattern and a reference state specified from said predetermined code pattern, and the recording parameter of data recording serving as the origin by which said evaluation value is calculated.

**Patentansprüche**

1. Verfahren zum Anpassen einer Aufzeichnungsleistungsbedingung eines Aufzeichnungs-/Abspielsystems für optische Platten, beinhaltend die nachfolgenden Schritte:

Messen eines Abspielsignals aus der Ermittlung durch Abspielen des Ergebnisses eines Bereiches (span) von geschriebenen oder aufgezeichneten Daten auf einer optischen Platte (15);
Bestimmen, ob der Asymmetriewert aus der Berechnung aus dem Messergebnis des Schrittes des Messens zur Anpassung einer Aufzeichnungsleistung verwendet werden kann;
Berechnen einer vorbestimmten Statistik entsprechend einem Extremwert, der entweder ein lokaler Maximalwert oder ein lokaler Minimalwert ist, mit der Amplitude eines Abspielsignals entsprechend spezifizierenden Codes aus dem Messergebnis in dem Schritt des Messens für den Fall des Bestimmens, dass der Asymmetriewert nicht zur Anpassung der Aufzeichnungsleistung verwendet werden kann; und
Festlegen der Aufzeichnungsleistung in Abhängigkeit von der vorbestimmten Statistik.

2. Verfahren zum Anpassen einer Aufzeichnungsbedingung eines Aufzeichnungs- /Abspielsystems für optische Platten nach Anspruch 1,
wobei die vorbestimmte Statistik die Differenzgröße zwischen dem Maximalwert und Minimalwert der Extremwerte ist.

3. Verfahren zum Anpassen einer Aufzeichnungsbedingung eines Aufzeichnungs- /Abspielsystems für optische Platten nach Anspruch 1,
wobei die vorbestimmte Statistik die Verteilung bzw. Streuung der Extremwerte ist.

4. Verfahren zum Anpassen einer Aufzeichnungbedingung eines Aufzeichnungs- /Abspielsystems für optische Platten nach Anspruch 1, wobei der Schritt des Bestimmens den nachfolgenden Schritt beinhaltet:

Bestimmen, ob mit in der optischen Platte vorab aufgezählten Medienkennungen der Asymmetriewert nicht zur Anpassung der Aufzeichnungsleistung verwendet werden kann.

5. Verfahren zum Anpassen einer Aufzeichnungbedingung eines Aufzeichnungs- /Abspielsystems für optische Platten nach Anspruch 1, wobei der Schritt des Festlegens den nachfolgenden Schritt beinhaltet:

Spezifizieren einer optimalen Aufzeichnungsleistung aus der Beziehung zwischen der Aufzeichnungsleistung und der vorbestimmten Statistik gemäß Spezifizierung aus der vorbestimmten Statistik entsprechend einer Mehrzahl der Aufzeichnungsleistung.

6. Verfahren zum Anpassen einer Aufzeichnungbedingung eines Aufzeichnungs- /Abspielsystems für optische Platten nach Anspruch 1, wobei der Schritt des Festlegens den nachfolgenden Schritt beinhaltet:

Berechnen eines Berichtigungsbetrages hinsichtlich der Aufzeichnungsleistung zum gegenwärtigen Zeitpunkt aus der Beziehung zwischen der Aufzeichnungsleistung und der vorbestimmten Statistik gemäß Spezifizierung aus der vorbestimmten Statistik entsprechend einer Mehrzahl der Aufzeichnungsleistung.

7. Verfahren zum Anpassen einer Aufzeichnungbedingung eines Aufzeichnungs- /Abspielsystems für optische Platten nach Anspruch 5 oder 6, wobei die Beziehung zwischen der Aufzeichnungsleistung und der vorbestimmten Statistik zum Zeitpunkt einer Testaufzeichnung ermittelt wird.

8. Verfahren zum Anpassen einer Aufzeichnungbedingung eines Aufzeichnungs- /Abspielsystems für optische Platten nach Anspruch 5 oder 6, wobei die Beziehung zwischen der Aufzeichnungsleistung und der vorbestimmten Statistik aus vorab auf der optischen Platte aufgezeichneten Daten ermittelt wird.

9. Verfahren zum Anpassen einer Aufzeichnungsleistungsbedingung eines Aufzeichnungs-/Abspielsystems für optische Platten, beinhaltend die nachfolgenden Schritte:

Messen eines Abspielsignals aus der Ermittlung durch Abspielen des Ergebnisses eines Bereiches (span) von geschriebenen oder aufgezeichneten Daten auf einer optischen Platte;
Berechnen eines Bewertungswertes hinsichtlich einer Devianz zwischen dem Signalzustand des Abspielsignals entsprechend einem vorbestimmten Codemuster und einem Bezugszustand gemäß Spezifizierung aus dem vorbestimmten Codemuster aus dem Messergebnis in dem Schrittes des Messens; und
Festlegen eines Aufzeichnungsleistungswertes entsprechend dem vorbestimmten Codemuster in Abhängigkeit von dem Bewertungswert.

10. Verfahren zum Anpassen einer Aufzeichnungbedingung eines Aufzeichnungs- /Abspielsystems für optische Platten nach Anspruch 9, wobei der Schritt des Festlegens den nachfolgenden Schritt beinhaltet:

Spezifizieren des optimalen Wertes des Aufzeichnungsparameters in Abhängigkeit von der Beziehung zwischen dem Aufzeichnungsparameter und dem Bewertungswert gemäß Spezifizierung aus dem Bewertungswert entsprechend den mehreren Werten des Aufzeichnungsparameters.

11. Verfahren zum Anpassen einer Aufzeichnungbedingung eines Aufzeichnungs- /Abspielsystems für optische Platten nach Anspruch 9, wobei der Schritt des Festlegens den nachfolgenden Schritt beinhaltet:

Berechnen des Berichtigungsbetrages des aktuellen Wertes des Aufzeichnungparameters in Abhängigkeit von der Beziehung zwischen dem Aufzeichnungsparameter und dem Bewertungswert gemäß Spezifizierung aus dem Bewertungswert entsprechend den mehreren Werten des Aufzeichnungsparameters.

12. Verfahren zum Anpassen einer Aufzeichnungbedingung eines Aufzeichnungs- /Abspielsystems für optische Platten nach Anspruch 10 oder 11, wobei die Beziehung zwischen dem Aufzeichnungsparameter und dem Bewertungswert zum Zeitpunkt einer Testaufzeichnung spezifiziert wird.

13. Verfahren zum Anpassen einer Aufzeichnungsbedingung eines Aufzeichnungs-/Abspielsystems für optische Platten nach Anspruch 10 oder 11, wobei die Beziehung zwischen dem Aufzeichnungsparameter und dem Bewertungswert aus vorab auf der optischen Platte aufgezeichneten Daten ermittelt wird.

14. Aufzeichnungs-/Abspielvorrichtung für optische Platten, umfassend:

Mittel (115) zum Messen eines Abspielsignals aus der Ermittlung durch Abspielen des Ergebnisses eines Bereiches (span) von geschriebenen oder aufgezeichneten Daten auf einer optischen Platte;
Mittel (117) zum Bestimmen, ob der Asymmetriewert aus der Berechnung aus dem Messergebnis durch das Messmittel zur Anpassung der Aufzeichnungsleistung verwendet werden kann;
Mittel (117) zum Berechnen einer vorbestimmten Statistik entsprechend einem Extremwert, der entweder ein lokaler Maximalwert oder ein lokaler Minimalwert ist, mit der Amplitude eines Abspielsignals entsprechend spezifizierenden Codes aus dem Messergebnis durch das Messmittel für den Fall des Bestimmens, dass der Asymmetriewert nicht zur Anpassung der Aufzeichnungsleistung verwendet werden kann; und
Mittel (117) zum Festlegen der Aufzeichnungsleistung in Abhängigkeit von der vorbestimmten Statistik.

15. Aufzeichnungs-/Abspielvorrichtung für optische Platten, umfassend:

Mittel (115) zum Messen eines Abspielsignals aus der Ermittlung durch Abspielen des Ergebnisses eines Bereiches (span) von geschriebenen oder aufgezeichneten Daten auf einer optischen Platte;
Mittel (117) zum Berechnen eines Bewertungswertes hinsichtlich einer Devianz zwischen dem Signalzustand des Abspielsignals entsprechend einem vorbestimmten Codemuster und einem Bezugszustand gemäß Spezifizierung aus dem vorbestimmten Codemuster aus dem Messergebnis des Abspielsignals; und
Mittel (117) zum Festlegen eines Aufzeichnungsleistungswertes entsprechend dem vorbestimmten Codemuster auf Grundlage des Bewertungswertes.

16. Computerprogramm zum Veranlassen eines Prozessors, die nachfolgenden Schritte auszuführen:

Messen eines Abspielsignals aus der Ermittlung durch Abspielen des Ergebnisses eines Bereiches (span) von geschriebenen oder aufgezeichneten Daten auf einer optischen Platte (15);
Bestimmen, ob der Asymmetriewert aus der Berechnung aus dem Messergebnis des Schrittes des Messens zur Anpassung einer Aufzeichnungsleistung verwendet werden kann;
Berechnen einer vorbestimmten Statistik entsprechend einem Extremwert, der entweder ein lokaler Maximalwert oder ein lokaler Minimalwert ist, mit der Amplitude eines Abspielsignals entsprechend spezifizierenden Codes aus dem Messergebnis in dem Schritt des Messens für den Fall des Bestimmens, dass der Asymmetriewert nicht zur Anpassung der Aufzeichnungsleistung verwendet werden kann; und
Festlegen der Aufzeichnungsleistung in Abhängigkeit von der vorbestimmten Statistik.

17. Programm nach Anspruch 16 zum Veranlassen eines Prozessors, des Weiteren den nachfolgenden Schritt auszuführen:

Speichern der vorbestimmten Statistik aus der Berechnung in dem Schritt des Berechnens auf eine mit der Aufzeichnungsleistung korrelierte Weise.

18. Computerprogramm zum Veranlassen eines Prozessors, die nachfolgenden Schritte auszuführen:

Messen eines Abspielsignals aus der Ermittlung durch Abspielen des Ergebnisses eines Bereiches (span) von geschriebenen oder aufgezeichneten Daten auf einer optischen Platte;
Berechnen eines Bewertungswertes hinsichtlich einer Devianz zwischen dem Signalzustand des Abspielsignals entsprechend einem vorbestimmten Codemuster und einem Bezugszustand gemäß Spezifizierung aus dem vorbestimmten Codemuster aus dem Messergebnis in dem Schritt des Messens; und
Festlegen eines Aufzeichnungsleistungswertes entsprechend dem vorbestimmten Codemuster in Abhängigkeit von dem Bewertungswert.

19. Programm nach Anspruch 18 zum Veranlassen eines Prozessors, des Weiteren des nachfolgenden Schritt auszuführen:

Speichern des Bewertungswertes aus der Berechnung in dem Schritt des Berechnens auf eine mit der Aufzeichnungsleistung korrelierte Weise.

20. Prozessor zum Speichern des Programms, das in einem der Ansprüche 16 bis 19 beschrieben ist, in einem Speicher.

21. Optische Platte (15) zur Verwendung mit der Aufzeichnungs-/Abspielvorrichtung für optische Platten nach Anspruch 14, zum Vorabaufzeichnen von Daten zur Darstellung der Beziehung zwischen einer vorbestimmten Statistik entsprechend einem Extremwert, der ein lokaler Maximalwert oder ein lokaler Minimalwert ist, mit der Amplitude eines Abspielsignals entsprechend spezifizierenden Codes und der Aufzeichnungsleistung der Datenaufzeichnung in der Funktion als Ursprung, durch den die vorbestimmte Statistik berechnet wird.

22. Optische Platte (15) zur Verwendung mit der Aufzeichnungs-/Abspielvorrichtung für optische Platten nach Anspruch 15, zum Vorabaufzeichnen von Daten zur Darstellung der Beziehung zwischen einem Bewertungswert hinsichtlich einer Devianz zwischen dem Signalzustand eines Abspielsignals entsprechend einem vorbestimmten Codemuster und einem Bezugszustand gemäß Spezifizierung aus dem vorbestimmten Codemuster und dem Aufzeichnungsparameter der Datenaufzeichnung in der Funktion als Ursprung, durch den der Bewertungswert berechnet wird.

**Revendications**

1. Procédé de réglage d'un état de puissance d'enregistrement d'un système d'enregistrement/de lecture d'un disque optique, comprenant les étapes consistant à :

➢ mesurer un signal de lecture obtenu en lisant le résultat d'une plage de données écrites ou enregistrées dans un disque optique (15) ;
➢ déterminer si la valeur d'asymétrie calculée à partir du résultat de la mesure de ladite étape de mesure peut être utilisée ou pas pour le réglage de la puissance d'enregistrement ;
➢ calculer une statistique prédéterminée selon une valeur de crête qui est l'une d'une valeur maximale locale et d'une valeur minimale locale avec l'amplitude d'un signal de lecture selon des codes de spécification à partir du résultat de la mesure dans ladite étape de mesure, dans le cas où il a été déterminé que ladite valeur d'asymétrie ne pouvait pas être utilisée pour le réglage de la puissance d'enregistrement ; et
➢ décider ladite puissance d'enregistrement sur la base de ladite statistique prédéterminée.

2. Procédé de réglage d'un état d'enregistrement d'un système d'enregistrement/de lecture d'un disque optique selon la revendication 1, dans lequel ladite statistique prédéterminée est la quantité différence entre la valeur maximum et la valeur minimum desdites valeurs de crête.

3. Procédé de réglage d'un état d'enregistrement d'un système d'enregistrement/de lecture d'un disque optique selon la revendication 1, dans lequel ladite statistique prédéterminée est la dispersion desdites valeurs de crête.

4. Procédé de réglage d'un état d'enregistrement d'un système d'enregistrement/de lecture d'un disque optique selon la revendication 1, dans lequel ladite étape de détermination comprend l'étape consistant à :

déterminer si avec les ID de supports énumérés dans ledit disque optique à l'avance, ladite valeur d'asymétrie peut être utilisée ou pas pour le réglage de la puissance d'enregistrement.

5. Procédé de réglage d'un état d'enregistrement d'un système d'enregistrement/de lecture d'un disque optique selon la revendication 1, dans lequel ladite étape de décision comprend l'étape consistant à :

spécifier une puissance d'enregistrement optimale à partir de la relation entre ladite puissance d'enregistrement et ladite statistique prédéterminée, qui est spécifiée à partir de ladite statistique prédéterminée correspondant à une pluralité de dites puissances d'enregistrement.

6. Procédé de réglage d'un état d'enregistrement d'un système d'enregistrement/de lecture d'un disque optique selon la revendication 1, dans lequel ladite étape de décision comprend l'étape consistant à :

calculer une quantité de correction de ladite puissance d'enregistrement au moment présent à partir de la relation entre ladite puissance d'enregistrement et ladite statistique prédéterminée, qui est spécifiée à partir de ladite statistique prédéterminée correspondant à une pluralité de dites puissances d'enregistrement.

7.  Procédé de réglage d'un état d'enregistrement d'un système d'enregistrement/de lecture d'un disque optique selon la revendication 5 ou la revendication 6, dans lequel la relation entre ladite puissance d'enregistrement et ladite statistique prédéterminée est obtenue au moment d'un enregistrement d'essai.

8.  Procédé de réglage d'un état d'enregistrement d'un système d'enregistrement/de lecture d'un disque optique selon la revendication 5 ou la revendication 6, dans lequel la relation entre ladite puissance d'enregistrement et ladite statistique prédéterminée est obtenue à partir de données enregistrées à l'avance dans ledit disque optique.

9.  Procédé de réglage d'un état de puissance d'enregistrement d'un système d'enregistrement/de lecture d'un disque optique, comprenant les étapes consistant à :

    ➢ mesurer un signal de lecture obtenu en lisant le résultat d'une plage de données écrites ou enregistrées dans un disque optique ;
    ➢ calculer une valeur d'évaluation en ce qui concerne une déviance entre l'état de signal dudit signal de lecture correspondant à un motif de code prédéterminé et un état de référence spécifié à partir dudit motif de code prédéterminé à partir du résultat de la mesure dans ladite étape de mesure ; et
    ➢ décider une valeur de puissance d'enregistrement correspondant audit motif de code prédéterminé sur la base de ladite valeur d'évaluation.

10. Procédé de réglage d'un état d'enregistrement d'un système d'enregistrement/de lecture d'un disque optique selon la revendication 9, dans lequel ladite étape de décision comprend l'étape consistant à :

    spécifier la valeur optimale dudit paramètre d'enregistrement sur la base de la relation entre ledit paramètre d'enregistrement et ladite valeur d'évaluation, qui est spécifiée à partir de ladite valeur d'évaluation correspondant aux multiples valeurs dudit paramètre d'enregistrement.

11. Procédé de réglage d'un état d'enregistrement d'un système d'enregistrement/de lecture d'un disque optique selon la revendication 9, dans lequel ladite étape de décision comprend l'étape consistant à :

    calculer la quantité de correction de la valeur actuelle dudit paramètre d'enregistrement sur la base de la relation entre ledit paramètre d'enregistrement et ladite valeur d'évaluation, qui est spécifiée à partir de ladite valeur d'évaluation correspondant aux multiples valeurs dudit paramètre d'enregistrement.

12. Procédé de réglage d'un état d'enregistrement d'un système d'enregistrement/de lecture d'un disque optique selon la revendication 10 ou la revendication 11, dans lequel la relation entre ledit paramètre d'enregistrement et ladite valeur d'évaluation est spécifiée au moment d'un enregistrement d'essai.

13. Procédé de réglage d'un état d'enregistrement d'un système d'enregistrement/de lecture d'un disque optique selon la revendication 10 ou la revendication 11, dans lequel la relation entre ledit paramètre d'enregistrement et ladite valeur d'évaluation est obtenue à partir de données enregistrées à l'avance dans ledit disque optique.

14. Dispositif d'enregistrement/de lecture d'un disque optique comprenant :

    ➢ des moyens (115) configurés de manière à mesurer un signal de lecture obtenu en lisant le résultat d'une plage de données écrites ou enregistrées dans un disque optique ;
    ➢ des moyens (117) configurés de manière à déterminer si la valeur d'asymétrie calculée à partir du résultat de la mesure par lesdits moyens de mesure peut être utilisée ou pas pour le réglage de la puissance d'enregistrement ;
    ➢ des moyens (117) configurés de manière à calculer une statistique prédéterminée selon une valeur de crête qui est l'une d'une valeur maximale locale et d'une valeur minimale locale avec l'amplitude d'un signal de lecture selon des codes de spécification à partir du résultat de la mesure par lesdits moyens de mesure, dans le cas où il a été déterminé que ladite valeur d'asymétrie ne pouvait pas être utilisée pour le réglage de la puissance d'enregistrement ; et
    ➢ des moyens (117) configurés de manière à décider ladite puissance d'enregistrement sur la base de ladite statistique prédéterminée.

**15.** Dispositif d'enregistrement/de lecture d'un disque optique comprenant:

> ➢ des moyens (115) configurés de manière à mesurer un signal de lecture obtenu en lisant le résultat d'une plage de données écrites ou enregistrées dans un disque optique ;
> ➢ des moyens (117) configurés de manière à calculer une valeur d'évaluation en ce qui concerne une déviance entre l'état de signal dudit signal de lecture correspondant à un motif de code prédéterminé et un état de référence spécifié à partir dudit motif de code prédéterminé à partir du résultat de la mesure dudit signal de lecture ; et
> ➢ des moyens (117) configurés de manière à décider une valeur de puissance d'enregistrement correspondant audit motif de code prédéterminé sur la base de ladite valeur d'évaluation.

**16.** Programme informatique adapté pour faire exécuter par un processeur les étapes consistant à :

> ➢ mesurer un signal de lecture obtenu en lisant le résultat d'une plage de données écrites ou enregistrées dans un disque optique (15) ;
> ➢ déterminer si la valeur d'asymétrie calculée à partir du résultat de la mesure de ladite étape de mesure peut être utilisée ou pas pour le réglage de la puissance d'enregistrement ;
> ➢ calculer une statistique prédéterminée selon une valeur de crête qui est l'une d'une valeur maximale locale et d'une valeur minimale locale avec l'amplitude d'un signal de lecture selon des codes de spécification à partir du résultat de la mesure dans ladite étape de mesure, dans le cas où il a été déterminé que ladite valeur d'asymétrie ne pouvait pas être utilisée pour le réglage de la puissance d'enregistrement ; et
> ➢ décider ladite puissance d'enregistrement sur la base de ladite statistique prédéterminée.

**17.** Programme selon la revendication 16, destiné à faire exécuter par un processeur l'étape supplémentaire consistant :

> sauvegarder ladite statistique prédéterminée calculée dans ladite étape de calcul d'une manière corrélée avec ladite puissance d'enregistrement.

**18.** Programme informatique adapté pour faire exécuter par un processeur les étapes consistant à :

> ➢ mesurer un signal de lecture obtenu en lisant le résultat d'une plage de données écrites ou enregistrées dans un disque optique ;
> ➢ calculer une valeur d'évaluation en ce qui concerne une déviance entre l'état de signal dudit signal de lecture correspondant à un motif de code prédéterminé et un état de référence spécifié à partir dudit motif de code prédéterminé à partir du résultat de la mesure dans ladite étape de mesure ; et
> ➢ décider une valeur de puissance d'enregistrement correspondant audit motif de code prédéterminé sur la base de ladite valeur d'évaluation.

**19.** Programme selon la revendication 18, destiné à faire exécuter par un processeur l'étape supplémentaire consistant :

> sauvegarder ladite valeur d'évaluation calculée dans ladite étape de calcul d'une manière corrélée avec ladite puissance d'enregistrement.

**20.** Processeur stockant en mémoire le programme décrit dans l'une quelconque des revendications 16 à 19.

**21.** Disque optique (15), destiné à être utilisé dans un dispositif d'enregistrement/de lecture de disque optique selon la revendication 14, configuré de manière à enregistrer des données à l'avance qui représentent la relation entre la statistique prédéterminée selon une valeur de crête qui est une valeur maximale locale ou une valeur minimale locale avec l'amplitude d'un signal de lecture selon des codes de spécification, la puissance d'enregistrement de l'enregistrement de données servant d'origine permettant de calculer ladite statistique prédéterminée.

**22.** Disque optique (15), destiné à être utilisé dans un dispositif d'enregistrement/de lecture de disque optique selon la revendication 15, configuré de manière à enregistrer des données à l'avance qui représentent la relation entre une valeur d'évaluation qui concerne la déviance entre l'état de signal d'un signal de lecture correspondant à un motif de code prédéterminé et un état de référence spécifié à partir dudit motif de code prédéterminé, le paramètre d'enregistrement de l'enregistrement de données servant d'origine permettant de calculer ladite valeur d'évaluation.

FIG. 1

FIG. 2

```
                    ┌─────────┐
                    │  START  │
                    └────┬────┘
                         ▼
              ┌──────────────────┐  S1
              │ PERFORM TEST     │
              │ RECORDING        │
              └────────┬─────────┘
                       ▼
              ┌──────────────────┐  S3
              │ MEASURE NECESSARY│
              │ DATA             │
              └────────┬─────────┘
                       ▼
              ┌──────────────────┐  S5
              │                  │    CALCULATE ASYMMETRY VALUE
              │                  │    AT EACH RECORDING POWER
              └────────┬─────────┘
                       ▼
                      S7
              IS ASYMMETRY VALUE VALID?
         Yes  ◇                    ◇  No
```

S9  
EVALUATE RECORDING  
POWER USING  
ASYMMETRY VALUE

S11  
CALCULATE OPTIMAL  
VALUE OF RECORDING  
POWER BASED ON  
ASYMMETRY VALUE

S13  
CALCULATE 2T JITTER  
VALUE AT EACH  
RECORDING POWER

S15  
EVALUATE RECORDING  
POWER USING 2T  
JITTER

S17  
CALCULATE OPTIMAL  
VALUE OF RECORDING  
POWER BASED ON 2T  
JITTER

SET OPTIMAL  
RECORDING  
POWER  — S19

PERFORM TEST  
RECORDING  — S21

MEASURE NECESSARY  
DATA  — S23

( A )

FIG. 3

FIG. 4

FIG. 5

FIG. 6

FIG. 7

FIG. 8

FIG. 9

EP 1 956 595 B1

## FIG. 10

## FIG. 11

## FIG. 12

Tefp ADJUSTMENT    Telp ADJUSTMENT

## FIG. 13

THERMAL INTERFERENCE CORRECTION

## FIG. 14

SPOT INTERFERENCE CORRECTION

FIG. 15

FIG. 16

FIG. 17

FIG. 18

FIG. 19

RECORDING PARAMETER CORRECTION VALUE
DETERMINING PROCESSING

S91
CALCULATE DIFFERENCE BETWEEN AMPLITUDE
LEVEL AND REFERENCE SIGNAL REGARDING
CERTAIN DETECTION PATTERN

IS DIFFERENCE POSITIVE?

S93

No          Yes

S97

S95
DETERMINE
RECORDING
PARAMETER VALUE
CORRESPONDING TO
PRerror_pTn(p) IN THE
CASE OF POSITIVE
DIFFERENCE

S99

DETERMINE RECORDING
PARAMETER VALUE
CORRESPONDING TO
PRerror_pTn(p) IN THE CASE OF
NEGATIVE DIFFERENCE

CALCULATE DIFFERENCE BETWEEN
DETERMINED RECORDING PARAMETER
VALUE AND OPTIMAL VALUE OF RECORDING
PARAMETER AS CORRECTION AMOUNT

RETURN

FIG. 20

$y = 0.0066x^2 + 0.0025x + 0.0052$
$R^2 = 0.9234$

◆ CALCULATED VALUE
— APPROXIMATION EXPRESSION

PRerror_ptn

0.03
0.02
0.01
0

-3   -2   -1   0   1   2

dTtop2T

FIG. 21

| | |
|---|---|
| | Initial zone |
| | Buffer zone |
| System Lead-in area | Control data zone ⋮ |
| | Recording condition data zone ⟋ 170 |
| | ⋮ |
| | Buffer zone |
| Connection area | Connection zone |
| | Guard track zone |
| | Disc test zone |
| | Drive test zone |
| Data Lead-in area | Guard track zone |
| | RMD duplication zone |
| | Recording management zone |
| | R-physical format information zone |
| | Reference code zone |
| | data area |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004234812 A